# EUROPÄISCHE PATENTSCHRIFT

(11) **EP 0 496 104 B1**
(45) Veröffentlichungstag und Bekanntmachung des Hinweises auf die Patenterteilung: **27.07.1994**
(21) Anmeldenummer: 91122088.7
(22) Anmeldetag: 22.12.1991
(51) Int. Cl.: F16K 11/00, E03C 1/05

(54) **Sanitäre Mischbatterie**
Sanitary mixing valve
Soupape mélangeur sanitaire

(30) Priorität: 25.01.1991 DE 4102135
(43) Veröffentlichungstag der Anmeldung: 29.07.1992
(73) Patentinhaber: HANSA METALLWERKE AG, D-70567 Stuttgart (DE)
(72) Erfinder: Schmidt, Heinz, W-7000 Stuttgart 80 (DE); Weinmann, Werner, W-7024 Filderstadt 1 (DE)
(74) Vertreter: Ostertag, Ulrich

(56) Entgegenhaltungen:
- EP-A- 0 384 006
- AU-D- 7 326 187
- DE-A- 3 800 557
- JP-A- 1 203 530

## Beschreibung

Die Erfindung betrifft eine sanitäre Mischbatterie mit einem Gehäuse, mit einem elektrisch betätigten Ventil, dessen Schließelemente das ausfließende Mischwasser steuern, mit einem in einer Kammer des Gehäuses angeordneten Regelelement, welches das Verhältnis von Kalt- und Warmwasser im ausfließenden Mischwasser bestimmt, und mit einem Auslauf.

Ein Problem bei allen derartigen bekannten elektrisch betätigten Sanitärarmaturen z.B. JP-A- 1203530, insbesondere auch bei berührungslos gesteuerten Sanitärarmaturen, ist der Platz, der von den mechanischen und elektrischen Bauelementen benötigt wird. Sollen alle diese Bauelemente innerhalb der Sanitärarmatur zusammengefaßt werden, ergibt sich häufig ein klobiges, unschönes Aussehen. Dies gilt verstärkt dann, wenn die elektrisch betätigte Sanitärarmatur eine Mischbatterie ist, bei welcher zusätzlich ein Regelelement zur Einstellung des Mischungsverhältnisses von Kalt- und Warmwasser vorgesehen werden muß.

Bei bekannten sanitären Mischbatterien der eingangs genannten Art waren das die Mischwassertemperatur bestimmende Regelelement und das elektrisch betätigte Ventil (im allgemeinen ein reines Absperrventil) räumlich voneinander getrennt.

Aufgabe der vorliegenden Erfindung ist es, eine sanitäre Mischbatterie der eingangs genannten Art derart auszugestalten, daß zumindest Regelelement und elektrisch betätigtes Ventil weniger Platz benötigen und somit der Mischbatterie ein gefälligeres Erscheinungsbild gegeben werden kann.

Diese Aufgabe wird erfindungsgemäß dadurch gelöst, daß
a) das Regelelement als Hohlkolben ausgebildet ist;
b) der Kohlkolben an seinem Außenumfang eine Struktur aufweist, welche im Zusammenwirken mit in die Gehäusekammer mündenden Strömungswegen für Kalt- und Warmwasser deren Mischungsverhältnis bestimmt;
c) der Weg des Mischwassers zumindest teilweise durch den Innenraum des Hohlkolbens führt und in diesem Bereich des Innenraumes des Hohlkolbens zumindest die Schließelemente des elektrisch betätigten Ventils angeordnet sind.

Erfindungsgemäß werden also zumindest die Schließelemente des elektrisch betätigten Ventiles innerhalb des Regelelementes selbst untergebracht, das hierzu als Hohlkolben gestaltet wird. Hierzu muß eine Wasserführung gewählt werden, bei welcher der Weg des Mischwassers in Richtung auf den Auslauf der Armatur zumindest teilweise durch den Innenraum des Hohlkolbens führt. Die Schließelemente des elektrisch betätigten Ventiles machen auf diese Weise alle Bewegungen des Hohlkolbens mit. Durch die gegenseitige Verschachtelung von Regelelement und Schließelementen des elektrisch betätigten Ventiles wird nicht nur erheblicher Platz eingespart; es entsteht so eine Baueinheit, in welcher alle mechanischen Elemente der sanitären Mischbatterie zusammengefaßt sind, die also als Einheit aus der sanitären Mischbatterie herausgenommen und ggf. gewartet oder gar ausgetauscht werden kann.

Zweckmäßigerweise ist an den Hohlkolben eine zylindrische Schürze angeformt, auf welcher ein Betätigungsgriff befestigbar ist. Im allgemeinen ist es nämlich noch gebräuchlich, auch bei elektrisch betätigten oder berührungslos gesteuerten Sanitärarmaturen die Temperatureinstellung von Hand vorzunehmen.

Bei dieser Ausgestaltung läßt sich auch der von der Schürze umgebene Raum noch sinnvoll nutzen: Im allgemeinen umfassen nämlich elektrisch betätigte Ventile eine Magnetspule. Diese kann nach einem besonderen Merkmal der Erfindung in dem von der Schürze des Hohlkolbens umgebenen Raum angeordnet sein.

Die Struktur am Außenumfang des Hohlkolbens, welche das Mischungsverhältnis des ausfließenden Wassers bestimmt, kann insbesondere eine Nut umfassen, welche das Mischwasser an der Außenseite des Hohlkolbens entlang leitet. Der Wasserweg führt also nach dem Eintritt in die Gehäusekammer, in welcher sich der Hohlkolben bewegt, zunächst an der Außenseite des Hohlkolbens entlang, bevor das Mischwasser dann ins Innere des Hohlkolbens und zu den dort angeordneten Schließelementen des elektrisch betätigten Ventiles geleitet wird.

Am einfachsten ist es, wenn die Nut das Mischwasser zum offenen Ende des Hohlkolbens führt.

Sehr häufig ist das Regelelement als Drehkolben ausgebildet. Dann empfiehlt sich diejenige Ausgestaltung, bei welcher die Nut unter einem Winkel gegenüber der Achse wendelartig am Außenumfang des Hohlkolbens entlang geführt ist und bei welcher weiter die Mittelpunkte der Mündungsöffnungen der Strömungswege für Kalt- und Warmwasser in die Gehäusekammer auf einer Gerade liegen, die zur Drehachse des Hohlkolbens parallel ist. Die "schräg" verlaufende Nut schneidet je nach Drehstellung die beiden Mündungsöffnungen der Strömungswege für Kalt- und Warmwasser unterschiedlich an. Dies bedeutet, daß je nach Drehstellung unterschiedliche Mengen von Kalt- und Warmwasser aus den entsprechenden Strömungswegen in die Nut und von dort in den Innenraum des Hohlkolbens einströmen können.

Im allgemeinen werden als elektrisch betätigte Ventile aus energetischen Gründen pilotgesteuerte Ventile eingesetzt. Diese umfassen als Schließelement eine elastische Membran, die sich unter dem Einfluß der auf ihren beiden Seiten herrschenden Drücke zwischen einer Öffnungs- und einer Schließstellung hin- und herbewegen kann, wobei ein durch die Magnetspule bewegbarer Schließkörper durch Öffnen und Schließen einer Pilotöffnung die Drücke auf beiden Seiten der Membran beeinflußt. Ein solches pilotgesteuertes Ventil läßt sich für die erfindungsgemäßen Zwecke besonders dann nutzbar machen, wenn Schließkörper und Pilotöffnung entfernt von der Membran in der Nähe der Magnetspule angeordnet sind, wobei von der Pilotöffnung ein erster Kanal durch einen massiven Bereich des Hohlkolbens in einen Raum geführt ist, in welchem der auf einer Seite der Membran herrschende Druck vorliegt, und von dem Raum, der nach dem Abheben des Schließkörpers von der Pilotöffnung mit dem ersten Kanal in Verbindung gelangt, ein zweiter Kanal durch einen massiven Bereich des Hohlkolbens in einen Raum geführt ist, in welchem der auf der anderen Seite der Membran herrschende Druck vorliegt. Durch die räumliche Trennung von elastischer Membran und Schließkörper sowie Pilotöffnung können die räumlichen Verhältnisse am bzw. im Hohlkolben besser ausgenutzt werden, wobei die beiden genannten Kanäle der Vermittlung der auf beiden Seiten der Membran herrschenden Drücke dienen.

Räumlich besonders günstig gestaltet sich diejenige Ausführungsform der Erfindung, bei welcher die Schließelemente des elektrisch betätigten Ventiles umfassen:
a) eine schlauchförmige, elastische Membran, die an ihren Enden an der Innenwand des Hohlkolbens festgelegt und im mittleren Bereich radial beweglich ist;
b) ein innerhalb der schlauchförmigen, elastischen Membran angeordneter Anlagekörper, an dessen Mantelfläche die Membran in der Schließstellung anliegt und von dessen Mantelfläche die Membran in der Öffnungsstellung abhebt.

Dabei ist vorzugsweise der Anlagekörper Teil eines die Membran haltenden Käfigs, der an den axialen Enden jeweils einen Stützring aufweist, der mit einem radialen Wulst an dem entsprechenden axialen Ende der Membran zusammenwirkt, wobei die beiden Stützringe über Rippen mit dem Anlagekörper verbunden sind. Auf diese Weise sind die Schließelemente des elektrisch betätigten Ventiles zu einer Einheit zusammengefügt, die insgesamt in das Innere des Hohlkolbens eingeschoben werden kann. Diese Einheit kann ggf. auch als Ganzes ausgetauscht werden.

Ein Ausführungsbeispiel der Erfindung wird nachfolgend anhand der Zeichnung näher erläutert; es zeigen
- Figur 1:: die Vorderansicht einer berührungslos gesteuerten Sanitärarmatur;
- Figur 2:: einen Schnitt gemäß Linie II-II von Figur 1;
- Figur 3:: einen Schnitt gemäß Linie III-III von Figur 1;
- Figur 4:: einen Ausschnitt aus Figur 3 in größerem Maßstab;
- Figur 5:: eine Ansicht, ähnlich der Figur 4, jedoch geschnitten gemäß Pfeil V in Figur 2 (Drehkolben nicht geschnitten);
- Figur 6:: einen Schnitt gemäß Linie VI-VI von Figur 3 in vergrößertem Maßstab.

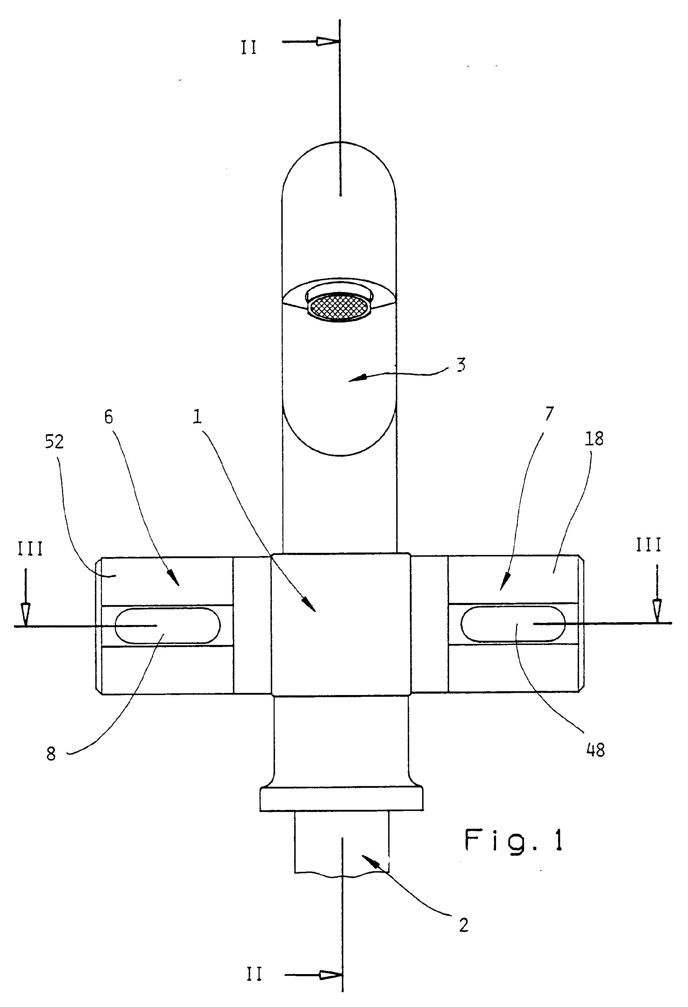

Wie der Figur 1 der Zeichnung zu entnehmen ist, läßt sich die dargestellte berührungslos gesteuerte Sanitärarmatur zwanglos in fünf Hauptkomponenten unterteilen:

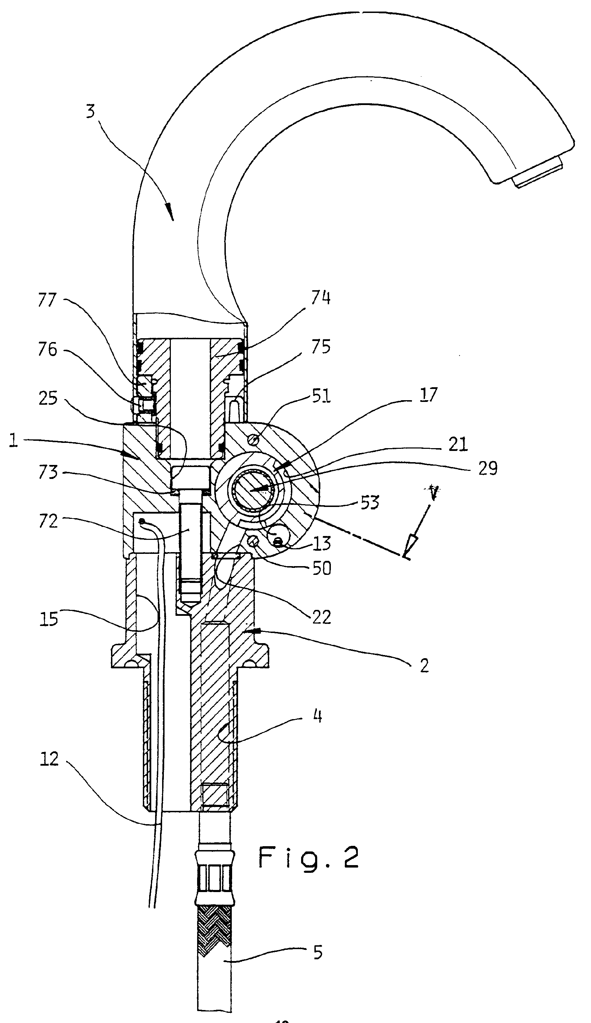

Auf ein zentrales Hauptgehäuse 1, an welches unten ein Sockelteil 2 angesetzt ist, ist ein Schwenkauslauf 3 aufgesteckt. Zulaufkanäle 4 für Warmund Kaltwasser (einer in Figur 2 gestrichelt angedeutet) durchsetzen das Sockelteil 2. In diese sind von unten her flexible Wasserzuführungsschläuche 5 eingeschraubt.

Symmetrisch zu der in Figur 1 angedeuteten Schnittebene II-II sind an das Hauptgehäuse 1 zwei griffähnliche Ansätze 6 und 7 angefügt.

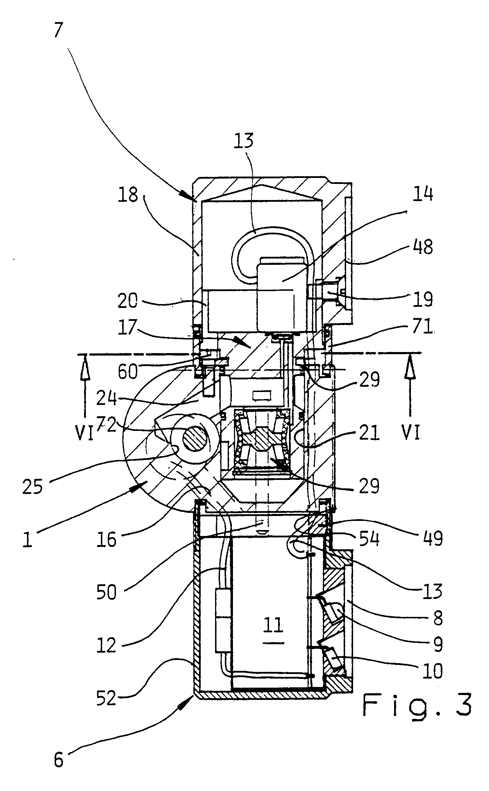

Der linke griffähnliche Ansatz 6 hat nur das äußere Erscheinungsbild, nicht jedoch die Funktion eines Griffes. Er dient ausschließlich dazu, die elektronischen Baukomponenten der berührungslos gesteuerten Armatur aufzunehmen. In Figur 1 sowie Figur 3 ist das optische Ein- und Austrittsfenster 8 für das zur Erfassung eines Benutzers verwendete Infrarotlicht dargestellt. Das Fenster 8 ist dunkel eingefärbt, so daß seine Funktion als optisches Fenster und die dahinter liegende Sendediode 9 sowie die Empfangsdiode 10 nicht erkennbar sind (vergl. den Schnitt in Figur 3). In Figur 3 ist zu erkennen, wie im Inneren des griffähnlichen Ansatzes 6 die Elektronik 11 untergebracht ist, welcher zum einen über ein Kabel 12 die Versorgungsspannung zugeführt wird und die zum anderen über ein weiteres Kabel 13 in noch zu beschreibender Weise mit einem Magnetventil 14 verbunden ist, welches den Wasserstrom steuert. Das Kabel 12 ist über eine achsparallele Bohrung 15 im Hauptgehäuse 1 bzw. dem Sockelteil 2 sowie eine Schrägbohrung 16 im Hauptgehäuse 1 aus der Sanitärarmatur ausgeführt.

Die Anordnung ist offensichtlich so, daß in dem griffähnlichen Ansatz 6 all diejenigen Bauelemente zu einer Einheit zusammengefaßt sind, welche als "elektronisch" in dem Sinne bezeichnet werden können, daß sie der elektrischen Erfassung eines Benutzers vor der Sanitärarmatur und der Erzeugung von solchen Signalen dienen, mit denen ein Magnetventil angesteuert werden kann.

Der rechte griffähnliche Ansatz 7 ist beim dargestellten Ausführungsbeispiel nicht nur "griffähnlich", sieht also nicht nur einem üblichen Sanitärarmaturen-Griff sondern besitzt tatsächlich diese Funktion. Er läßt sich nämlich zur Einstellung der Temperatur des aus der Sanitärarmatur ausfließenden Mischwassers um seine horizontal liegende Achse verdrehen. Bei einer Sanitärarmatur, die ausschließlich Wasser einer einzigen Temperatur abgibt, wäre auch der Ansatz 7 nur griff"ähnlich", würde also die Funktion eines Griffes nicht wirklich ausüben sondern nur das Vorhandensein eines solchen Griffes optisch vortäuschen.

In dem griffähnlichen Ansatz 7 sind all diejenigen Bauelemente als Einheit untergebracht bzw. montiert, welche der Steuerung des Wasserstromes dienen und in diesem Sinne als "mechanisch" betrachtet werden können. Zu diesen mechanischen Bauelementen gehören insbesondere ein magnetisch betätigtes Pilotventil, dessen Aufbau weiter unten näher erläutert wird, sowie einen mit diesem baulich vereinigten Drehkolben 17, auch "Reiber" genannt, zur Temperatureinstellung.

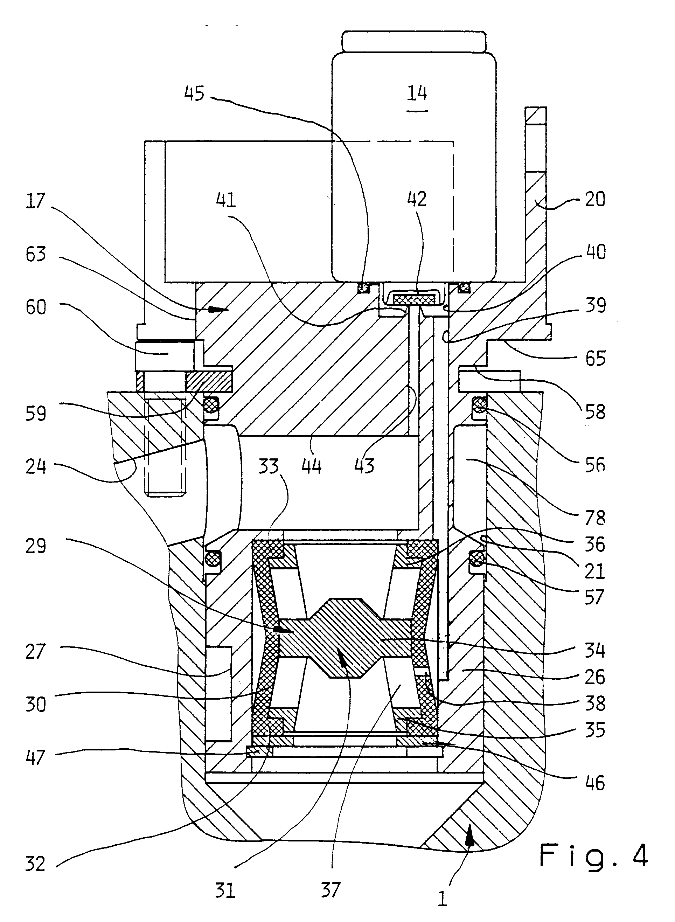

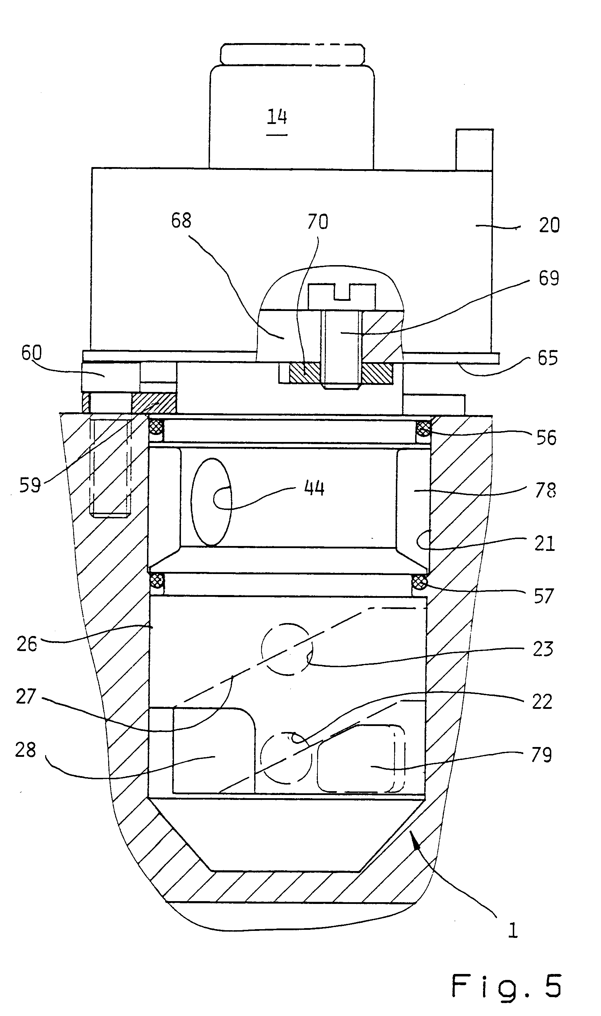

Zur genaueren Beschreibung dessen, was in bzw. an dem griffähnlichen Ansatz 7 untergebracht ist, wird nunmehr auf die Figuren 4 und 5 Bezug genommen, welche gegenüber den Figuren 1 bis 3 einen größeren Maßstab aufweisen. Das becherförmige äußere Gehäuse 18 des griffähnlichen Ansatzes 7 ist in den Figuren 4 und 5 der Übersichtlichkeit halber weggelassen. Es ist mit einer Schraube 19 an einer zylindrischen Schürze 20 des Reibers 17 befestigt, wie dies der Figur 3 zu entnehmen ist. Beim Verdrehen des äußeren Gehäuses 18 wird somit der gesamte Reiber 17 mitgenommen, was in noch zu beschreibender Weise das Mischungsverhältnis von Kalt- und Warmwasser verändert.

Der Reiber 17 ist ein einstückiges Formteil, welches an dem von der Schürze 20 abgewandten Ende in eine zylindrische Kammer 21 des Hauptgehäuses 1 hineinragt. In diese Kammer 21 münden schräg durch das Hauptgehäuse 1 hindurchgeführte Bohrungen 22, 23 (vergl. auch Figur 5), welche mit den Bohrungen 4 im Sockelteil 2 kommunizieren und über die somit Kalt- und Warmwasser in die zylindrische Kammer 21 gelangen kann. Axial gegenüber den Bohrungen 22 und 23 versetzt mündet in die zylindrische Kammer 21 eine weitere Bohrung 24 des Hauptgehäuses 1, welche mit einer vertikalen, zum Auslauf 3 führenden Bohrung 25 in Verbindung steht. Dies ist insbesondere der Figur 3 zu entnehmen. Wäre also in die zylindrische Kammer 21 nicht das innere Ende des Reibers 17 eingesetzt, so könnte das über die Schläuche 5, die Kanäle 4, 22 und 23 in die zylindrische Kammer 21 des Hauptgehäuses 1 einströmende Wasser direkt über die Bohrungen 24 und 25 zum Auslauf 3 strömen.

Die Einstellung des Mischungsverhältnisses von Kalt- und Warmwasser geschieht durch einen im wesentlichen zylindrischen Kopf 26 des Reibers 17, in welche eine schräg verlaufende Nut 27 eingearbeitet ist. Die Nut 27 schneidet je nach Drehstellung die Kanäle 22 und 23 im Hauptgehäuse unterschiedlich an. In Figur 5 ist diejenige Stellung dargestellt, in welcher gleiche Anteile von Kalt- und Warmwasser erhalten werden, weil die Kanäle 22 und 23 sich beide in gleichem Maße, nämlich zur Hälfte, in die Nut 27 hinein öffnen. Es kann daher Wasser aus den Kanälen 22 und 23 in die Nut 27 hineinströmen. Die Nut 27 führt das sich vermischende Wasser in einen Rücksprung 28 am Außenumfang des Kopfes 26 des Reibers 17, von wo es zur Stirnseite des Reibers 17 gelangen kann.

Im unteren Bereich der Mantelfläche des Reiberkopfes 26 ist ein elastisches Kissen 79 eingelassen. Wird der Reiber 17 in die volle Kaltstellung verdreht, liegt das Kissen 79 über der Mündung der das Warmwasser zuführenden Bohrung 22 und schließt diese dicht ab. Hierdurch werden Warmwasserverluste vermieden.

Der weitere Weg des an der offenen Stirnseite des Reibers 17 angelangten Mischwassers zum Kanal 24 und damit zum Auslauf 3 führt über den Innenraum des hohlen Kopfes 26 des Reibers 17, in welchem ein pilotgesteuertes Ventil 29 untergebracht ist, sowie über eine radiale Bohrung 44 im Reiber 17 und einen Ringraum 78, der zwischen der Wand der Kammer 21 und einem im Durchmesser verkleinerten Bereich des Reibers 17 liegt. Der Ringraum 78 wird in axialer Richtung durch zwei O-Ringe 56 und 57 begrenzt, die in Nuten auf der Mantelfläche des Reibers 17 angeordnet sind.

Ohne das pilotgesteuerte Ventil 29 könnte das an der inneren Stirnseite des Kopfes 26 des Reibers 17 angekommene Wasser frei durch den Innenraum des Reibers 17 zum Kanal 24 strömen.

Das pilotgesteuerte Ventil 29 umfaßt als Schließelemente eine Membran 30 aus elastischen Material sowie einen Käfig 31 aus starrem Kunststoff, mit welchem die Membran 30 zusammenwirkt. Dieser ist in der Zeichnung zwar einstückig dargestellt, kann aber auch mehrteilig aufgebaut sein.

Die elastische Membran 30 hat die Form zweier gegensinnig aneinandergesetzter Kegelstümpfe, wobei an den axial gegenüberliegenden Enden radial nach innen ragende Wulste 32, 33 angeformt sind.

Der Käfig 31 umfaßt einen mittleren Anlagekörper 34 sowie an beiden axialen Enden jeweils einen Stützring 35 bzw. 36, welcher mit dem dort befindlichen Wulst 32, 33 der elastischen Membran 30 zusammenwirkt. Der Anlagekörper 34 des Käfigs 31 ist über Rippen 37 mit den Stützringen 35, 36 zu einer Einheit verbunden.

Käfig 31 und auf diesen aufgeknüpfte Membran 30 liegen an einer Stufe im Innenraum des Reibers an und sind am außenliegenden Ende durch einen Beilagering 46 und einen Sprengring 47 lösbar gesichert.

Die elastische Membran 30 ist so geformt, daß sie sich normalerweise, also ohne Druckbeaufschlagung durch Wasser von innen oder außen, an die Außenseite des Anlagekörpers 34 des Käfigs 31 anlegt. Dies ist der Schließzustand des pilotgesteuerten Ventiles 29, da dann der Wasserweg durch den Innenraum des Reibers 17 zum Kanal 24 durch den Anlagekörper 34 und die Membran 29 versperrt ist.

Die Membran 29 kann sich aus der dargestellten Schließstellung in eine Öffnungsstellung bewegen, indem sie sich im mittleren Bereich von dem Anlagekörper 34 abhebt und gegen die Wandung der zylindrischen Kammer 21 des Hauptgehäuses 1 anlegt. Dabei wird ein Ringraum zwischen der Membran 29 und dem Anlagekörper 24 zur Durchströmung freigegeben.

Diese Bewegung der Membran 30 geschieht unter dem Einfluß der Drücke, die radial innerhalb und radial außerhalb von ihr existieren. Diese Vorgänge sind an und für sich bekannt und brauchen hier nicht näher erläutert zu werden. Im vorliegenden Zusammenhang genügt, folgendes zu wissen:

Der unterhalb des Anlagekörpers 34 liegende Innenraum der Membran 29 ist durch eine kleine radiale Ausgleichsbohrung 38 mit dem Außenraum verbunden. Dieser wiederum kommuniziert über einen achsparallelen Kanal 39 mit einer Ausnehmung 40 an der äußeren, radial innerhalb der Schürze 20 liegenden Stirnseite des Reibers 17. Die Ausnehmung 40 ist von der Unterseite der Magnetspule 14 abgedeckt und durch einen O-Ring 45 abgedichtet. Am Boden der Ausnehmung 40 ist ein Ventilsitz 41 ausgeformt, welcher mit einem Schließkörper 42 zusammenwirkt. Der Schließkörper 42 verschließt normalerweise den Ventilsitz 41 und damit den Zugang zu einem achsparallelen Kanal 43, welcher zu der Radialbohrung 44 im Reiber 17 und damit zum Kanal 24 im Hauptgehäuse 1 führt.

Solange der Schließkörper 42 den Ventilsitz 41 verschließt, wie dies in Figur 4 gezeigt ist, ist die von außen auf die elastische Membran 30 wirkende Druckkraft größer als die im Innenraum der Membran 29 herrschende resultierende Druckkraft. Die Membran 30 bleibt daher in Kontakt mit dem Außenumfang des Anlagekörpers 34 des Käfigs 31; das pilotgesteuerte Ventil 29 ist geschlossen.

Wird jedoch die Spule 14 des pilotgesteuerten Ventiles bestromt, hebt der Schließkörper 42 vom Ventilsitz 41 ab. Dies hat eine Veränderung der auf die Membran 30 wirkenden Drücke in dem Sinne zur Folge, daß die Membran 30 im mittleren Bereich von dem Anlagekörper 34 abhebt und sich in die Öffnungsstellung begibt, in welcher sie an der Innenwandung des Kopfes 26 des Reibers 17 2 anliegt.

Bei der Montage der berührungslos gesteuerten Sanitärarmatur werden zunächst die von den griffähnlichen Ansätzen 6 und 7 gehaltenen bzw. gebildeten Einheiten vormontiert.

Für den griffähnlichen Ansatz 6 bedeutet dies, daß in dessen Gehäuse 52 vom offenen Ende her die Sendediode 9 sowie die Empfangsdiode 10 und die Elektronik 11 eingeführt und befestigt werden. Das Gehäuse 52 trägt an seinem offenen Ende ein Gewinde, in welches ein Ring 49 eingeschraubt wird. Zwei Schrauben 50, 51 (vergl. auch Figur 2) erstrecken sich quer durch das Hauptgehäuse 1 hindurch und sind mit ihrem Gewindeende in Gewindebohrungen des Ringes 49 eingedreht. Die Köpfe der Schrauben 50, 51 legen sich dabei gegen eine Versenkung in der in Figur 1 rechten Seitenfläche des Hauptgehäuses 1 an. Der linke griffähnliche Ansatz 6 ist damit an dem Hauptgehäuse 1 befestigt. Durch die Verwendung des Ringes 49 und der Schrauben 50, 51 ist es möglich, die Winkelorientierung des Gehäuses 52 und damit die Ausrichtung des optischen Fensters 8 genau festzulegen, was nicht ohne weiteres möglich wäre, wenn das Gehäuse 52 des linken griffähnlichen Ansatzes 6 einfach mit dem Ende in das Hauptgehäuse 1 eingeschraubt wäre.

Vor der endgültigen Festlegung des griffähnlichen Ansatzes 6 an dem Hauptgehäuse 1 wird selbstverständlich noch das Kabel 12 durch die Kanäle 15 und 16 ausgeführt; das Kabel 13 wird durch einen das Hauptgehäuse 1 vollständig durchsetzenden Kanal 53 (vergl. auch Figur 2) zur anderen Seitenfläche des Hauptgehäuses 1 hindurchgeführt.

Ein zylindrischer Kragen 54 am inneren Ende des Gehäuses 52 ragt in eine Nut an der in Figur 1 linken Seitenfläche des Hauptgehäuses 1. Hierdurch ergibt sich ein optisch gefälliger Übergang zwischen dem griffähnlichen Ansatz 6 und dem Hauptgehäuse 1.

Die Befestigung des in Figur 1 rechten griffähnlichen Ansatzes 7, der tatsächlich ein echter Griff ist, geschieht auf folgende Weise (die nachfolgende Beschreibung nimmt insbesondere Bezug auf die Figuren 3 bis 6):

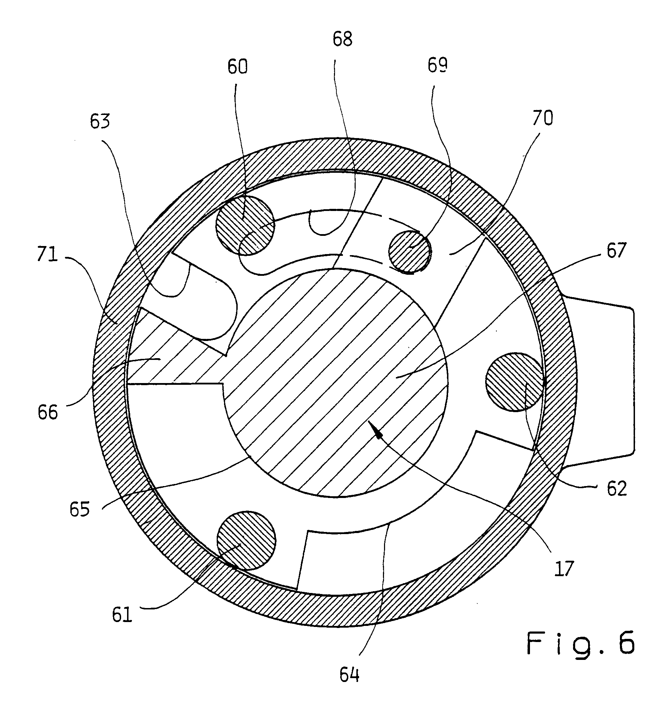

An derjenigen axialen Stelle, an welcher im eingebauten Zustand die in Figur 1 rechte Seitenfläche des Hauptgehäuses 1 zu liegen kommt, ist der Reiber 17 mit einer Nut 58 versehen. In diese Nut 58 ist von der Seite her ein U-förmiges Befestigungsteil 59 eingeschoben. Dieses ist mit drei Schrauben 60, 61 und 62 an der in Figur 1 rechte Seitenfläche des Hauptgehäuses 1 festgeschraubt. Eine dieser Schrauben, nämlich die Schraube 60, ist in den Figuren 4 und 5 dargestellt; alle drei Schrauben sind in Figur 6 erkennbar, welche einen Schnitt gemäß Linie VI-VI von Figur 3, in Höhe der Köpfe der Schrauben 60, 61, 62 darstellt. Die Köpfe der Schrauben 60, 61, 62 sind durch Ausnehmungen 63, 64 zugänglich, die sich achsparallel durch den äußeren Teil des 17 bis zu der in Figur 1 rechten Stirnseite hindurch erstrecken. Diese Ausnehmungen 63, 64 können durch Verdrehen des Reibers 17 abwechselnd in Fluchtung mit den Köpfen der Schrauben 60, 61, 62 gebracht werden, so daß die Schrauben 60, 61, 62 hier eingeführt und mit einem Schraubenzieher festgedreht werden können.

Der Winkel, um welchen der Reiber 17 zur Einstellung der Temperatur des ausfließenden Mischwassers verdreht werden kann, ist auf folgende Weise einstellbar:

Unmittelbar an die Außenseite der Nut 58 angrenzend (in Figur 4 also oberhalb von dieser) ist in der Außenkontur des Reibers 17 eine weiterer Einstich 65 vorgesehen, welcher aber einen größeren Durchmesser als die Nut 58 aufweist und nicht vollständig um den Umfang des Reibers 17 herumgeführt ist. Vielmehr ragt, wie der Figur 6 zu entnehmen ist, vom "Kern" 67 des Reibers 17 ein schwalbenschwanzförmiger Ansatz 66 radial nach außen. Dieser schwalbenschwanzförmige Ansatz 66 begrenzt die Verdrehbarkeit des Reibers 17 in Figur 6 im Uhrzeigersinn, indem er in Anlage an den Kopf der Schraube 60 kommt.

Ein bogenförmiges Langloch 68 durchsetzt die Wand zwischen der Ringschulter, welche von dem Einstich 65 gegen den die Schürze 20 tragenden Teilbereich des Reibers 17 gebildet wird, und der äußeren, von der Schürze 20 umgebenen Stirnwand des Reibers 17, auf welche auch die Magnetspule 14 aufgesetzt ist. Durch dieses Langloch 68 ist von außen her eine Schraube 69 geführt, welche an der erwähnten Ringschulter des Einstichs 65 ein Anschlagstück 70 festhält. Das Anschlagstück 70 verläuft radial vom "Kern" 67 des Reibers 17 zum Außenumfang der von dem Einstich 65 gebildeten Ringschulter. Es begrenzt die Verdrehbarkeit des Reibers 17 gegen den Uhrzeigersinn, indem es gegen den Kopf der Schraube 60 zur Anlage kommt. Ersichtlich ist der gesamte Drehwinkel, den der Reiber 17 durchmessen kann, durch die variable Position des Anschlagstückes 70 im bogenförmigen Langloch 68 bestimmt.

Wenn der Reiber 17 mit dem in diesem untergebrachten pilotgesteuerten Ventil 29 und der dieses betätigenden Magnetspule 14 mittels des U-förmigen Befestigungsteiles 59 und der Schrauben 60 bis 62 am Hauptgehäuse 1 festgelegt ist, wird das Gehäuse 18 auf die Schürze 20 des Reibers 17 aufgeschoben und dort mit einer Schraube 19 befestigt. Ein mit dem Gehäuse 18 verschraubter zylindrischer Kragen 71, der auch mit dem Gehäuse 18 einstückig sein könnte, greift dabei in eine Nut in der in Figur 1 rechten Seitenfläche des Hauptgehäuses 1 ein. Die Verhältnisse sind insoweit identisch mit der Art, wie das äußere Gehäuse 52 des in Figur 1 linken griffähnlichen Ansatzes 6 in eine Nut an der linken Seitenfläche des Hauptgehäuses 1 eingreift.

Abschließend wird der Kopf der Schraube 19 im Griff 18 mit einem Fenster 48 verdeckt, dessen Aussehen dem Fenster 8 im in Figur 1 linken griffähnlichen Ansatz 6 entspricht. Äußerlich bietet sich somit, wie der Figur 1 zu entnehmen ist, ein völlig symmetrisches Erscheinungsbild.

Das Hauptgehäuse 1 ist am Sockelteil 2 durch eine zentrale Schraube 72 befestigt (Figur 2), deren Kopf im oberen Bereich in der bereits erwähnten Bohrung 25 liegt, welche das von der zylindrischen Kammer 21 fließende Mischwasser zum Auslauf 3 führt. Der Wasserweg nach unten ist in Figur 2 durch einen Dichtring 73 versperrt, welcher zwischen dem Kopf der Schraube 72 und der darunter liegenden Ringschulter der Bohrung 25 angeordnet ist.

Zur Befestigung des Auslaufes 3 am Hauptgehäuse 1 ist in letzteres von oben her ein Befestigungsstutzen 74 eingeschraubt. Der Befestigungsstutzen 74 besitzt im oberen Bereich einen etwas größeren Durchmesser und liegt hier über O-Ringe an der Innenwand des Auslaufes 3 an. Dieser ist über den Befestigungsstutzen 74 bis nahe an die obere Stirnseite des Hauptgehäuses 1 geschoben. Ein U-förmiges Befestigungsteil 75 liegt zwischen der Innenwand des Auslaufes 3 und dem im Durchmesser verkleinerten Bereich des Befestigungsstutzens 74. An ihm ist der Auslauf 3 mittels einer Schraube 76 festgelegt. Das Befestigungsteil 75 liegt mit einem sich in axialer Richtung erstreckenden Vorsprung 77 an einer Ringstufe an, welche den im Durchmesser erweiteren Bereich des Befestigungsstutzens 74 mit dem im Durchmesser kleineren Bereich verbindet. Hierdurch ist der Auslauf 3 in axialer Richtung fixiert. Durch eine entsprechende Profilierung der Außenkontur des Befestigungsstutzens 74 wirkt der axiale Vorsprung 77 gleichzeitig als Begrenzung für den Drehwinkel, den der Auslauf 3 gegenüber dem Hauptgehäuse 1 durchmessen kann.

Das oben beschriebene Ausführungsbeispiel betraf eine berührungslos gesteuerte, elektrisch betätigte Mischbatterie mit einer bestimmten Aufteilung der verschiedenen Bauelemente auf zwei griffähnliche Ansätze. Die Berührungslosigkeit sowie dies geschilderte Aufteilung sind aber keine notwendigen Merkmale der Erfindung.

## Patentansprüche

1. Sanitäre Mischbatterie mit einem Gehäuse (1), mit einem elektrisch betätigten Ventil (14), dessen Schließelemente (30,34) das ausfließende Mischwasser steuern, mit einem in einer Kammer des Gehäuses (1) angeordneten Regelelement (17), welches das Verhältnis von Kalt- und Warmwasser im ausfließenden Mischwasser bestimmt, und mit einem Auslauf (3),
dadurch gekennzeichnet, daß
a) das Regelelement als Kohlkolben (17) ausgebildet ist,
b) der Hohlkolben (17) an seinem Außenumfang eine Struktur (27) aufweist, welche im Zusammenwirken mit in die Gehäusekammer (21) mündenden Strömungswegen (22, 23) für Kalt- und Warmwasser deren Mischungsverhältnis bestimmt;
c) der Weg des Mischwassers zumindest teilweise durch den Innenraum des Hohlkolbens (17) führt und in diesem Bereich des Innenraumes des Hohlkolbens (17) zumindest die Schließelemente (30, 34) des elektrisch betätigten Ventils (29, 14) angeordnet sind.

2. Sanitäre Mischbatterie nach Anspruch 1, dadurch gekennzeichnet, daß an dem Hohlkolben (17) eine zylindrische Schürze (20) angeformt ist, auf welcher ein Betätigungsgriff (18) befestigbar ist.

3. Sanitäre Mischbatterie nach Anspruch 1, bei welcher das elektrisch betätigte Ventil eine Magnetspule umfaßt, dadurch gekennzeichnet, daß die Magnetspule (14) in dem von der Schürze (20) des Hohlkolbens (17) umgebenen Raum angeordnet ist.

4. Sanitäre Mischbatterie nach einem der vorhergehenden Ansprüche, dadurch gekennzeichnet, daß die Struktur am Außenumfang des Hohlkolbens (17) eine Nut (27) umfaßt, welche das Mischwasser an der Außenseite des Hohlkolbens (17) entlang leitet.

5. Sanitäre Mischbatterie nach Anspruch 4, dadurch gekennzeichnet, daß die Nut (27) das Mischwasser zum offenen Ende des Hohlkolbens (17) führt.

6. Sanitäre Mischbatterie nach einem der vorhergehenden Ansprüche, bei welcher das Regelelement als Drehkolben ausgebildet ist, dadurch gekennzeichnet, daß die Nut (27) unter einem Winkel gegenüber der Achse wendelartig am Außenumfang des Hohlkolbens (17) entlanggeführt ist und daß die Mittelpunkte der Mündungsöffnungen der Strömungswege (22, 23) für Kalt- und Warmwasser in die Gehäusekammer (21) auf einer Geraden liegen, die zur Drehachse des Hohlkolbens (17) parallel ist.

7. Sanitäre Mischbatterie nach Anspruch 3, bei welcher das elektrisch betätigte Ventil ein pilotgesteuertes Ventil ist, welches eine elastische Membran als Schließelement umfaßt, die sich unter dem Einfluß der auf ihren beiden Seiten herrschenden Drücke zwischen einer Öffnungs- und einer Schließstellung hin- und herbewegen kann, wobei ein durch die Magnetspule bewegbarer Schließkörper durch Öffnen und Schließen einer Pilotöffnung die Drücke auf beiden Seiten der Membran beeinflußt, dadurch gekennzeichnet, daß Schließkörper (42) und Pilotöffnung (41) entfernt von der Membran (30) in der Nähe der Magnetspule (14) angeordnet sind, daß von der Pilotöffnung (41) ein erster Kanal (43) durch einen massiven Bereich des Hohlkolbens (17) in einen Raum (44) geführt ist, in welchem der auf einer Seite der Membran (30) herrschende Druck vorliegt, und daß von dem Raum (40), der nach dem Abheben des Schließkörpers (42) von der Pilotöffnung (41) mit dem ersten Kanal (43) in Verbindung gelangt, ein zweiter Kanal (39) durch einen massiven Bereich des Hohlkolbens (17) in einen Raum geführt ist, in welchem der auf der anderen Seite der Membran (30) herrschende Druck vorliegt.

8. Sanitäre Mischbatterie nach einem der vorhergehenden Ansprüche, dadurch gekennzeichnet, daß die Schließelemente des elektrisch betätigten Ventils (29, 14) umfassen:
a) eine schlauchförmige, elastische Membran (30), die an ihren Enden an der Innenwand des Hohlkolbens (17) festgelegt und im mittleren Bereich radial beweglich ist;
b) einen innerhalb der schlauchförmigen, elastischen Membran (30) angeordneten Anlagekörper (34), an dessen Mantelfläche die Membran (30) in der Schließstellung anliegt und von dessen Mantelfläche die Membran (30) in der Öffnungsstellung abhebt.

9. Sanitäre Mischbatterie nach Anspruch 8, dadurch gekennzeichnet, daß der Anlagekörper (34) Teil eines die Membran (30) haltenden Käfigs (31) ist, der an den axialen Enden jeweils einen Stützring (35, 36) aufweist, der mit einem radialen Wulst (32, 33) am entsprechenden axialen Ende der Membran (30) zusammenwirkt, wobei die beiden Stützringe (35, 36) über Rippen (37) mit dem Anlagekörper (34) verbunden sind.

## Claims

1. Sanitary mixing battery comprising a housing (1), an electrically operated valve (14) the closure elements (30, 34) of which control the outflowing mixed water, a regulating element (17) arranged in a chamber of the housing (1), which regulating element (17) determines the ratio of cold and hot water in the outflowing mixed water, and an outlet (3),
characterised in that
a) the regulating element is in the form of a hollow piston (17),
b) the hollow piston (17) has on its outer periphery a structure (27) which, in cooperation with flow channels (22, 23) for cold and hot water which open into the housing chamber (21), determines the mixing ratio of that water;
c) the path of the mixed water passes at least partially through the interior of the hollow piston (17) and at least the closure elements (30, 34) of the electrically operated valve (29, 14) are arranged in that region of the interior of the hollow piston (17).

2. Sanitary mixing battery according to claim 1, characterised in that there is formed on the hollow piston (17) a cylindrical skirt (20) to which an operating grip (18) may be fastened.

3. Sanitary mixing battery according to claim 1, in which the electrically operated valve comprises a magnetizing coil, characterised in that the magnetizing coil (14) is arranged in the space surrounded by the skirt (20) of the hollow piston (17).

4. Sanitary mixing battery according to any one of the preceding claims, characterised in that the structure on the outer periphery of the hollow piston (17) comprises a groove (27) which conducts the mixed water along the outside of the hollow piston (17).

5. Sanitary mixing battery according to claim 4, characterised in that the groove (27) conveys the mixed water to the open end of the hollow piston (17).

6. Sanitary mixing battery according to any one of the preceding claims, in which the regulating element is in the form of a rotary piston, characterised in that the groove (27) is guided along the outer periphery of the hollow piston (17) in a helical manner at an angle to the axis, and the middle points of the outlet openings of the flow channels (22, 23) for cold and hot water into the housing chamber (21) lie in a straight line which is parallel to the rotational axis of the hollow piston (17).

7. Sanitary mixing battery according to claim 3, in which the electrically operated valve is a pilot-controlled valve comprising as the closure element a flexible diaphragm which is able to move back and forth between an open position and a closed position under the effect of the pressures prevailing on its two sides, wherein a closure body which is displaceable by the magnetizing coil influences the pressures on both sides of the diaphragm by opening and closing a pilot opening, characterised in that the closure body (42) and the pilot opening (41) are arranged remote from the diaphragm (30) in the vicinity of the magnetizing coil (14), a first channel (43) leads from the pilot opening (41) through a solid region of the hollow piston (17) into a space (44) in which the pressure prevailing on one side of the diaphragm (30) is present, and a second channel (39) leads from the space (40), which, after the lifting of the closure body (42) from the pilot opening (41), is in communication with the first channel (43), through a solid region of the hollow piston (17) into a space in which the pressure prevailing on the other side of the diaphragm (30) is present.

8. Sanitary mixing battery according to any one of the preceding claims, characterised in that the closure elements of the electrically operated valve (29, 14) comprise:
a) a tubular, flexible diaphragm (30) which is fixed at its ends to the inside wall of the hollow piston (17) and is radially movable in the middle region;
b) an abutment body (34) which is arranged inside the tubular, flexible diaphragm (30) and against the generated surface of which the diaphragm (30) rests in the closed position and from the generated surface of which the diaphragm (30) lifts in the open position.

9. Sanitary mixing battery according to claim 8, characterised in that the abutment body (34) is part of a cage (31) holding the diaphragm (30), which cage has at each axial end a supporting ring (35, 36) which cooperates with a radial bead (32, 33) at the corresponding axial end of the diaphragm (30), the two supporting rings (35, 36) being joined to the abutment body (34) via ribs (37).

## Revendications

1. Mitigeur sanitaire, comprenant un carter (1), comprenant une soupape à actionnement électrique (14) dont les éléments de fermeture (30, 34) commandent l'écoulement de l'eau mélangée, comprenant un élément de réglage (17) disposé dans une chambre du carter (1) pour fixer la proportion d'eau chaude et d'eau froide dans l'eau mélangée qui s'écoule, et comprenant une sortie (3),
caractérisé par le fait que :
a) l'élément de réglage est réalisé sous la forme d'un équipage creux (17),
b) l'équipage creux (17) comporte sur son pourtour extérieur une structure (27) qui, en coopération avec des trajets d'écoulement (22, 23) débouchant dans la chambre (21) du carter et destinés à l'eau froide et à l'eau chaude, fixe la proportion de leur mélange,
c) le trajet de l'eau mélangée passe, du moins partiellement, par le volume intérieur de l'équipage creux (17), et au moins les éléments de fermeture (30, 34) de la soupape à actionnement électrique (29, 14) sont disposés dans cette région du volume intérieur de l'équipage creux (17).

2. Mitigeur sanitaire selon la revendication 1, caractérisé par le fait qu'une jupe cylindrique (20) est formée sur l'équipage creux (17), et qu'une manette d'actionnement (18) peut être fixée sur celle-ci.

3. Mitigeur sanitaire selon la revendication 1, dans lequel la soupape à actionnement électrique comprend une bobine magnétique, caractérisé par le fait que la bobine magnétique (14) est disposée dans le volume qui est entouré par la jupe (20) de l'équipage creux (17).

4. Mitigeur sanitaire selon l'une des revendications précédentes, caractérisé par le fait que la structure comprend sur le pourtour extérieur de l'équipage creux (17) une rainure (27) le long de laquelle l'eau mélangée est amenée vers le côté extérieur de l'équipage creux (17).

5. Mitigeur sanitaire selon la revendication 4, caractérisé par le fait que la rainure (27) amène l'eau mélangée vers l'extrémité ouverte de l'équipage creux (17).

6. Mitigeur sanitaire selon l'une des revendications précédentes, dans lequel l'élément de réglage est réalisé sous la forme d'un équipage tournant, caractérisé par le fait que la rainure (27) s'étend à la manière d'une spire sur le pourtour extérieur de l'équipage creux (17) en formant un angle par rapport à l'axe, et par le fait que les centres des embouchures dans la chambre (21) du carter des trajets d'écoulement (22, 23) destinés à l'eau chaude et à l'eau froide sont situés sur une droite qui est parallèle à l'axe de rotation de l'équipage creux (17).

7. Mitigeur sanitaire selon la revendication 3, dans lequel la soupape à actionnement électrique est une valve asservie, laquelle comprend comme élément de fermeture une membrane élastique qui peut se déplacer en va-et-vient entre une position d'ouverture et une position de fermeture sous l'influence des pressions qui règnent sur ses deux faces, cependant qu'un organe de fermeture pouvant être déplacé par la bobine magnétique influe sur les pressions des deux côtés de la membrane par l'ouverture et par la fermeture d'un orifice d'asservissement, caractérisé par le fait que l'organe de fermeture (42) et l'orifice d'asservissement (41) sont disposés au voisinage de la bobine magnétique (14) en étant éloignés de la membrane (30), par le fait qu'un premier canal (43) conduit, depuis l'orifice d'asservissement (41) et à travers une zone massive de l'équipage creux (17), jusque dans un volume (44) dans lequel est présente la pression régnant sur un côté de la membrane (30), et par le fait que, depuis le volume (40) qui vient en communication avec le premier canal (43) après que le corps de fermeture (42) s'est écarté de l'orifice d'asservissement (41), un deuxième canal (39) conduit à travers une zone massive de l'équipage creux (17) jusque dans un volume dans lequel est présente la pression qui règne sur l'autre côté de la membrane (30).

8. Mitigeur sanitaire selon l'une des revendications précédentes, caractérisé par le fait que les éléments de fermeture de la soupape à actionnement électrique (29, 14) comprennent :
a) une membrane élastique en forme de tuyau (30) qui est fixée par ses extrémités à la paroi intérieure de l'équipage creux (17) et qui est mobile dans le sens radial dans sa zone centrale ;
b) un corps d'appui (34) qui est disposé à l'intérieur de la membrane élastique en forme de tuyau (30), sur la surface latérale duquel la membrane (30) porte dans la position de fermeture et de la surface latérale duquel la membrane (30) s'écarte dans la position d'ouverture.

9. Mitigeur sanitaire selon la revendication 8, caractérisé par le fait que le corps d'appui (34) est une partie d'une cage (31) qui maintient la membrane (30) et qui présente à chacune de ses extrémités dans le sens axial une couronne d'appui (35, 36) coopérant avec un bourrelet radial (32, 33) présent sur l'extrémité correspondante de la membrane (30) dans le sens axial, les deux couronnes d'appui (35, 36) étant reliées au corps d'appui (34) par l'intermédiaire de nervures (37).
